# EUROPÄISCHE PATENTSCHRIFT

(11) **EP 1 448 391 B1**
(45) Veröffentlichungstag und Bekanntmachung des Hinweises auf die Patenterteilung: **16.08.2006**
(21) Anmeldenummer: 02743246.7
(22) Anmeldetag: 28.06.2002
(51) Int. Cl.: B32B 37/00, E04F 15/20, B32B 21/08, B32B 25/04

(54) **PANEEL MIT SCHALLVERBESSERNDER SCHICHT NEBST HERSTELLUNGSVERFAHREN**
PANEL WITH SOUND INSULATION LAYER AND PRODUCTION METHOD
PANNEAU POURVU D'UNE COUCHE D'ISOLATION ACOUSTIQUE ET PROCEDE DE FABRICATION

(30) Priorität: 23.10.2001 DE 10151614
(43) Veröffentlichungstag der Anmeldung: 25.08.2004
(73) Patentinhaber: M. Kaindl, 5071 Wals/Salzburg (AT)
(72) Erfinder: RUHDORFER, Herbert, A-5071 Wals/Salzburg (AT)
(74) Vertreter: Gille Hrabal Struck Neidlein Prop Roos
(86) Internationale Anmeldenummer: PCT/EP2002/007149
(87) Internationale Veröffentlichungsnummer: WO 2003/035396

(56) Entgegenhaltungen:
- EP-A- 0 411 452
- PATENT ABSTRACTS OF JAPAN vol. 017, no. 493 (M-1475), 7. September 1993 (1993-09-07) & JP 05 124139 A (OKURA IND CO LTD), 21. Mai 1993 (1993-05-21)

## Beschreibung

Die Erfindung betrifft ein Verfahren zur Aufbringung einer Schicht, die der Verminderung von Schall bei Betreten eines Fußbodens dient, auf ein Paneel für einen Fußboden sowie ein derartiges Paneel.

Paneele im Fußbodenbereich sind als Laminatfußboden oder Parkett bekannt. Ein Laminatfußboden besteht aus einer sogenannten Trägerplatte, die im allgemeinen aus HDF, MDF oder Spanmaterial gefertigt ist. Oberhalb der Trägerplatte befindet sich ein sogenanntes Dekorpapier sowie regelmäßig eine weitere Schicht, die für eine hinreichende Abriebfestigkeit auf der Oberfläche sorgt. Das Dekorpapier kann jedoch auch bereits abriebfest beschaffen sein. Unterhalb der Trägerplatte befindet sich ein sogenanntes Gegenzugpapier.

Insbesondere die Papiere sind mit Aminoplasten getränkt und zwar insbesondere mit Harnstoffharzen und/oder Melaminharzen. Werden die Papiere mit der Trägerplatte in einer Presse unter Zuführung von Temperatur und Druck verpreßt, so erweichen sich die Harze und härten aus.

Das Dekorpapier sorgt für den gewünschten optischen Eindruck des aus den Paneelen gebildeten Fußbodens. Durch das Gegenzugpapier soll sichergestellt werden, dass sich beim Verpressen der Schichten bzw Papiere die Trägerplatte bzw. das Paneel nicht verzieht.

Parkettpaneele unterscheiden sich von einem Laminat insbesondere durch die Oberfläche. Die gewünschte Optik wird durch Holz und damit nicht durch bedrucktes Papier bewirkt. Ein Parkettfußboden besteht aus Vollholz, kann aber auch eine Trägerplatte aus HDF, MDF oder Spanmaterial aufweisen. An der Oberseite ist dann jedoch eine Holzfurnierschicht oder Papier aufgebracht. Rückseitig ist in diesem Fall ein spezieller Holzteil oder Papier als Gegenzug aufgebracht.

Werden die Paneele auf einem Fußbodenuntergrund verlegt, so tritt beim Betreten des Fußbodens eine verhältnismäßig starke Geräuschentwicklung auf. Zur Vermeidung einer solchen Geräuschentwicklung ist beim Stand der Technik bereits vorgesehen, einen sogenannten Trittschallschallschutz vorzusehen. Es handelt sich dabei um eine unterhalb eines Paneels angebrachten Schicht mit schalldämmenden und/oder schallabsorbierenden Eigenschaften. Ergänzend oder alternativ kann die Schicht eine Verschiebung der Frequenzen und der Lautheit des erzeugten Schalls bewirken, die dann so sind, dass diese subjektiv als weniger störend empfunden werden.

Die den Trittschallschutz bewirkende Schicht wird hier allgemein als "schallverbessernde Schicht" bezeichnet.

Schallverbessernde Schichten sind insbesondere wie folgt beschaffen:

Die schallverbessernde Schicht ist regelmäßig elastisch verformbar im Vergleich zum oben definierten Paneel. Eine solche Schicht besteht beispielsweise aus Polyurethan-Recyclingmaterial, Gummi, Kork, Schaumstoffe, thermoplastische Materialien, Fasermatten oder LDF (low density material). Die Dichte liegt in der Regel bei 200 bis 1000 kg/m³.

Alternativ wird als schallverbessernde Schicht eine sogenannte Schwerfolie eingesetzt. Diese zeichnet sich durch ein Gewicht von 1000 bis 5000 g/m² aus.

Eine Schwerfolie - am Laminat verklebt - sorgt für einen guten Kontakt zum Fußbodenuntergrund, wodurch das Aufliegen auf der darunterliegenden Ebene verbessert und so das Schallempfinden bei Betreten des Fußbodens verbessert wird. Eine Schwerfolie besteht typischerweise aus Polyäthylen mit Füllstoffen.

Nachteilhaft wird beim Stand der Technik die schallverbessernde Schicht nachträglich auf das Laminatpaneel aufgeklebt. Das Paneel wird also zunächst durch Verpressen und ein hiermit einhergehendes Verkleben von Schichten bzw. Papieren hergestellt. In einem nächsten Arbeitsschritt wird die schallverbessernde Schicht aufgeklebt. Als Kleber zur Anbringung der schallverbessernde Schicht werden zum Beispiel PVAC-Kleber, Thermoplaste oder Holzleime vorgesehen.

Das nachträgliche Aufkleben und der damit einhergehende weitere Arbeitsschritt verteuert nicht nur den Herstellungsprozess, sondern der Randabschluss ist auch vergleichsweise schlecht. Wird eine schallverbessernde Schicht nachträglich aufgeklebt, so gelingt kaum ein bündiger Randabschluß. Im allgemeinen verbleibt also z.B. ein Bereich unterhalb des Paneels, der frei von einer schallverbessernden Schicht ist, weil ein bündiger Abschluss in der Praxis kaum und nur schlecht erreicht wird. Entsprechend verschlechtert sich die gewünschte Wirkung der schallverbessernden Schicht. Da dieser Bereich in der Regel an die Nuten und Federn eines Paneels angrenzt, ist die mechanische Belastung dieser Verriegelungselemente beim Begehen des Fußbodens groß. Darüber hinaus besteht die Gefahr, dass sich die schallverbessernde Schicht wieder von einem Paneel bei nachfolgenden Verarbeitungsschritten oder während des Verlegens ablöst.

Ein thermoplastischer Kleber hat darüber hinaus den Nachteil, nicht besonders fest eine schallverbessernde Schicht mit dem Paneel zu verbinden. Auch aus diesem Grunde kann eine schallverbessernde Schicht sich verhältnismäßig leicht wieder vom Paneel lösen. Hieraus ergeben sich Handhabungsnachteile sowie Nachteile bei der Produktion, so z.B. beim Schneiden der Verbindungselemente.

Lösen sich schallverbessernde Schichten leicht vom Paneel, so ist es kaum möglich, Paneele während des Verlegens zu verschieben, da sich hierdurch die schalldämmende Schicht vom Paneel lösen könnte. Es ist also eine Zielsetzung, ein Verfahren sowie ein dazugehöriges Paneel bereitzustellen, bei dem die schallverbessernde Schicht besser mit dem Paneel verbunden ist, bei dem die Randabschlüsse verbessert sind und bei der die Produktion kostengünstiger ist.

Die verwendeten Klebematerialien können Umweltprobleme mit sich bringen. Z.B. können sich Lösungsmittel im Kleber befinden, die die Umwelt belasten. Hieraus ergeben sich Entsorgungsprobleme des Klebers. Außerdem muss für den Produktionsprozeß noch eine zusätzliche Komponente, nämlich der Kleber, bereitgestellt werden. Es ist daher wünschenswert, die Verwendung zusätzlicher Kleber zur Befestigung einer schallverbessernden Schicht auf ein Paneel zu vermeiden.

Aufgabe der Erfindung ist die Schaffung eines kostengünstigen Verfahrens nebst zugehörigem Paneel, das in Bezug auf die trittschall- und raumhallverbessernde Schicht bessere Eigenschaften im Vergleich zum Stand der Technik aufweist.

Die Aufgabe der Erfindung wird durch ein Verfahren mit den Merkmalen des ersten Anspruchs sowie durch ein Paneel mit den Merkmalen des Nebenanspruchs gelöst. Vorteilhafte Ausgestaltungen ergeben sich aus den abhängigen Ansprüchen.

Verfahrensgemäß wird bei der Herstellung eines Paneels zusätzlich zu der Trägerplatte, zum Dekorpapier und zum Gegenzugpapier bzw. zum Holzfurnier eine Schicht vorgesehen, die als Blattware, bevorzugt als Rollware vorliegt. Das Material der Roll- oder Blattware ist so beschaffen, dass es über die oben genannten gewünschten schallverbessernden Eigenschaften verfügt bzw. diese beim Begehen eines Paneels bewirkt. Die Rollware oder Blattware wird gemeinsam mit den übrigen Bestandteilen in einer Presse verpresst, und zwar bei Temperaturen von wenigstens 100°C. Vorzugsweise werden höhere Temperaturen beim Verpressen vorgesehen, und zwar insbesondere oberhalb von 120°C. Typischerweise liegen die Temperaturen oberhalb von 200°C. Sie betragen vorzugsweise 230°C bis 250°C, um zu kurzen Presszeiten zu gelangen. Kurze Presszeiten ermöglichen ein schnelles Herstellen von Paneelen, so dass das Verfahren kostengünstig ist.

Die eingesetzte Blatt- oder Rollware muss entsprechend temperaturbeständig sein. Wird also bei 200°C verpreßt, so muss das eingesetzte Material, aus dem die schallverbessernde Schicht besteht, die gewählte Temperatur überstehen können.

Es kann dem Fachmann überlassen bleiben, geeignete Materialien in Abhängigkeit von einer geeigneten Presstemperatur auszuwählen, um so zu einem kostengünstigen Herstellungsverfahren zu gelangen.

Das Gegenzugpapier ist bei der Herstellung eines Laminatpaneels mit Aminoplast getränkt. Während des Verpressens bewirkt das eingesetzte Aminoplastmaterial eine Befestigung der schallverbessernden Schicht am Paneel.

Die so hergestellte Verbindung zwischen der schallverbessernden Schicht und dem Paneel ist wesentlich stabiler im Vergleich zum Stand der Technik.

Das Herstellungsverfahren ist wesentlich kostengünstiger, da ein Arbeitsschritt eingespart wird. Auch kann auf das Vorsehen zusätzlicher Kleber verzichtet werden. Hieraus ergeben sich Kostenvorteile. Ferner ist das Verfahren umweltfreundlich, da keine Kleber eingesetzt werden müssen, die zusätzlich zu entsorgen sind. Lösungsmittel, die eventuell in Klebern vorhanden sind, werden vermieden.

Verfahrensgemäß werden nach Herstellung einer großflächigen Platte hieraus Paneele mit den Maßen von zum Beispiel 1,40 m x 0,20 m herausgesägt und die Verriegelungselemente wie Nuten und Federn hineingefräst, Die Folge ist ein bündiger Randabschluss zwischen Paneel und der schallverbessernden Schicht. Hieraus werden die in diesem Zusammenhang oben genannten Nachteile vermieden.

Da die Befestigung zwischen schallverbessernder Schicht und dem Paneel sehr fest ist, kann problemlos gefräst werden. Dies war beim Stand der Technik nicht oder zumindest kaum möglich, da die Verbindung zwischen einem Paneel und der trittschallverbessernden Schicht relativ instabil war.

Soll die schallverbessernde Schicht mit einem Parkettpaneel verbunden werden, so geschieht dies in einer Kurztaktpresse. Für die Bereitstellung von Aminoplast kann ein Papier zwischen der untersten Schicht, die zum Paneel gehört, und der schallverbessernden Schicht gelegt werden. Das Papier ist dann etwa mit Aminoplast getränkt oder damit versehen.

In einer Ausführungsform der Erfindung wird Polyurethan-Recyclingmaterial eingesetzt und hieraus die schallverbessernde Schicht gebildet. Das Material ist kostengünstig. Es verfügt über sehr gute schallverbessernde Eigenschaften. Es wird aus der Recyclingbranche zurückgewonnen, so dass es umweltverträglich ist.

Die schallverbessernde Schicht sollte dann wenigstens 0,5 mm dick sein, um zu guten schallverbessernden Eigenschaften zu gelangen, die akzeptabel für den Verbraucher sind. Die Schicht aus Polyurethan-Recyclingmaterial kann in der Praxis bis zu 5 mm dick sein. Ist die schallverbessernde Schicht sehr dick, so ergeben sich merkliche Nachteile in Bezug auf Wärmeleitfähigkeit. Eine gute Wärmeleitfähigkeit ist bei der Verlegung oder Verwendung einer Fußbodenheizung von Interesse. Auch ist ein zu dicker Laminatfußboden unerwünscht, da anschließend nach dem Verlegen eine hohe Bauhöhe erreicht wird. Dies hat Nachteile für den Verbraucher, da er anschließend beispielsweise Türen entsprechend anpassen muß, was insbesondere im Renovierungsbereich üblich ist.

Als Aminoplast wird vorzugsweise Melaminharz und/oder Harnstoffharz und/oder Gemische aus diesen eingesetzt. Dies sind die Harze, die typischerweise beim Dekorpapier und beim Gegenzugpapier eingesetzt werden. Werden diese Harze verwendet, so muss keine zusätzliche Material-Komponente bereitgestellt werden, um das Produkt herzustellen.

Der Preßdruck liegt typischerweise zwischen 5 und 70 kPa. Durch das Verfahren wird die schallverbessernde Schicht also im allgemeinen komprimiert. Im Endprodukt bleibt die Komprimierung wenigstens teilweise erhalten. Bei Verwendung von Polyurethan (PUR) verdichtet sich die Schicht typischerweise von z.B. 1,2 mm auf 0,5 mm. Aufgrund der Erhaltung der Masse verändern sich die schallverbessernden Eigenschaften allenfalls unwesentlich.

Als Ausgangsmaterial kann beispielsweise Polyurethan/Recyclingmaterial mit einer Dichte eingesetzt werden, die zwischen 110 kg pro Kubikmeter und 750 kg pro Kubikmeter liegt.

Vom Stand der Technik unterscheidet sich das erfindungsgemäß hergestellte Produkt insbesondere dadurch, dass die Verbindung zwischen einem Paneel und der schallverbessernden Schicht durch ein Aminoplast bewirkt wird. Insbesondere wird die Verbindung aufgrund von Aminoplasten bewirkt, die auch zur Herstellung eines Paneels eingesetzt werden. Dies ist von Vorteil, um nicht zusätzliche Materialien einsetzen zu müssen.

In einer weiteren Ausgestaltung der Erfindung wird alternativ zu Polyurethan/Recyclingmaterial ein Material eingesetzt, aus dem eine Schwerfolie hergestellt wird. Vorzugsweise wird Polyäthylen mit Füllstoffen vorgesehen.

Versuche haben ergeben, dass die genannten Materialien Polyurethan/Recyclingmaterial sowie Polyäthylen mit Füllstoffen besonders gut sind, um zu schallverbessernden Eigenschaften zu gelangen. Darüber hinaus ließen sich diese Materialien problemlos verarbeiten und an einem Laminatfußboden oder Parkettfußbodenpaneel befestigen.

Rollware wird bei der Herstellung bevorzugt eingesetzt, um so in einer Doppelbandpresse kontinuierlich verpressen zu können. Andernfalls müsste eine Kurztaktpresse eingesetzt werden, was die Herstellung deutlich verteuern würde, da keine kurzen Presszeiten realisiert werden können.

Durch das Verfahren wird ein Paneel hergestellt, bei dem eine Schicht unterhalb des Paneels mit einem Aminoplast verbunden ist. Da nachträglich gesägt und gefräst wird, zeichnet sich das Produkt darüber hinaus grundsätzlich durch einen sehr guten Randabschluß aus. Es verbleibt also keine Lücke zwischen Paneelunterseite und der schallverbessernden Schicht. Daher ist der bündige Randabschluss grundsätzlich ein weiteres Merkmal des verfahrensgemäß hergestellten Produkts.

Die schallverbessernde Schicht schließt also bündig mit dem Paneel ab, und zwar dort, wo gesägt oder gefräst wurde. So kann der bündige Abschluß etwa auch bei einer Nut vorliegen, die in die Unterseite des Paneels hineingefräst worden ist, um auch auf diese Weise etwa leimlose Verbindungen zwischen Paneelen zu ermöglichen.

Ein sichtbarer Versatz zwischen schallverbessernder Schicht und Fußbodenpaneel tritt also nicht auf, es sei denn, dieser wäre nachträglich in einem weiteren Arbeitsschritt geschaffen worden.

Die gewählten Materialien Polyurethan/Recyclingmaterial sowie Polyäthylen mit Füllstoffen sind wärmebeständig, um unter Zufuhr von Temperatur verpresst werden zu können. Auch aus diesem Grunde sind diese besonders gut geeignet.

Die Dicke eines Paneels beträgt bei Laminat typischerweise 5 bis 14 mm. Bei Parkett liegt die Dicke typischerweise bei 10 bis 20 mm. Hinzukommt die schallverbessernde Schicht an der Unterseite, die jedoch sehr dünn sein kann.

Die schallverbessernde Schicht ist vorzugsweise dünner als das Paneel, und zwar insbesondere dünner als die Trägerplatte.

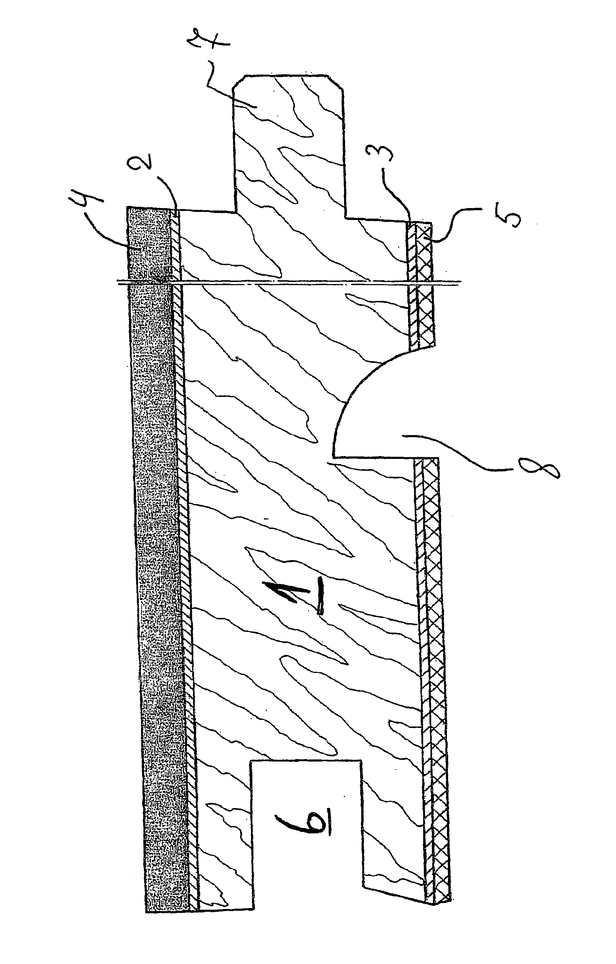

Die Erfindung wird anhand eines in der Figur gezeigten Ausführungsbeispiels näher erläutert.

Die Figur zeigt ein Laminatpaneel im Schnitt, welches aus einer Trägerplatte 1, einem Dekorpapier 2, einem Gegenzugpapier 3 und einer abriebfesten Schicht 4 gefertigt worden ist. Die Trägerplatte 1 besteht aus MDF/HDF (aber auch andere Materialien sind möglich). Bei diesem Material handelt es sich um Holzfasern, die zunächst etwa mit Leim versehen und anschließend in einer Presse zu einer Platte verpresst wurden. Auf der Trägerplatte 1 ist zunächst das Dekorpapier 2 und darüber die abriebfeste Schicht 4 aufgebracht. Unterhalb der Trägerplatte 1 befindet sich das Gegenzugpapier 3. Die Papierschichten sowie die abriebfeste Schicht sind zunächst mit einer Mischung aus einem Melaminharz und/oder Harnstoffharz versehen worden. Unter Zufuhr von Wärme und Druck wurden die Harze erweicht. Durch anschließendes Aushärten ist eine feste Verbindung zwischen den verschiedenen Schichten geschaffen worden.

Erfindungsgemäß wurde während der Herstellung im Unterschied zum Stand der Technik zusätzlich eine schallverbessernde Schicht 5 zusammen mit den übrigen vorgenannten Schichten verpresst. Die schallverbessernde Schicht besteht in diesem Fall aus Polyurethan (PUR). Die Schichtdicke betrug zunächst 1,2 mm. Durch das Verpressen der verschiedenen Schichten hat sich die Dicke auf 0,5 mm reduziert. Die schallverbessernde Schicht 5 ist mit dem Gegenzugpapier 3 aufgrund der eingesetzten Harze verbunden.

Nach Herstellung des Schichtverbundes wurde eine Nut 6, eine Feder 7 seitlich in das Paneel sowie (nach Bedarf) eine Nut 8 an der Unterseite des Paneels hineingefräst.

Das Herstellungsverfahren hat zur Folge, dass der Übergang von der schallverbessernden Schicht 5 zum Paneel bündig ist. Dies gilt sowohl an den seitlichen Begrenzungen des Paneels als auch bei den Übergängen, die innerhalb der Nut 8 auftreten.

In die Nut 8 eines Paneels und in die hierzu korrespondierende Nut 8 eines weiteren Paneels können beim Verlegen Metallklammern eingelegt werden, die zwei Paneele 1 miteinander in horizontaler Richtung verriegeln. Jeder Nut und jeder Feder ist also eine Nut 8 an der Unterseite zugeordnet. In der Figur wurde aus Gründen der Übersichtlichkeit lediglich eine Nut 8 eingezeichnet. Wäre das Paneel vollständig gezeichnet worden, so wäre eine weitere Nut 8 spiegelverkehrt zu sehen, die der Feder 7 zugeordnet ist.

## Patentansprüche

1. Verfahren zur Herstellung eines Paneels mit einer daran angebrachten schallverbessernden Schicht, bei dem mehrere Schichten in einer Presse unter Zufuhr von Druck und Wärme verpresst werden, wobei einzelne Schichten aus Holz, Holzwerkstoff oder Papier beschaffen sind, wenigstens eine Schicht ein mit Aminoplast versehenes Papier ist,
**dadurch gekennzeichnet, dass**
die Schichten zusammen mit der schallverbessernden Schicht verpresst werden,
wobei die schallverbessernde Schicht mit dem mit Aminoplast getränktem Papier verbunden wird,
und nach dem Verpressen das Paneel mit Verriegelungselementen versehen wird.

2. Verfahren zur Herstellung eines Paneels nach Anspruch 1 ,
**dadurch gekennzeichnet, dass**
die schallverbessernde Schicht aus elastisch verformbarem Material besteht.

3. Verfahren zur Herstellung eines Paneels nach Anspruch 1 oder 2,
**dadurch gekennzeichnet, dass**
die schallverbessernde Schicht aus Polyurethan-Recyclingmaterial, Gummi, Kork, Schaumstoff, thermoplastischen Materialien, Fasermatten, LDF oder Polyäthylen besteht.

4. Verfahren zur Herstellung eines Paneels nach einem der vorhergehenden Ansprüche,
**dadurch gekennzeichnet, dass**
die schallverbessernde Schicht eine Dichte von 20 bis 2500 kg/m³ aufweist.

5. Verfahren zur Herstellung eines Paneels nach einem der vorhergehenden Ansprüche,
**dadurch gekennzeichnet, dass**
eine Trägerplatte als zu verpressende Schicht eingesetzt wird und die schallverbessernde Schicht vorzugsweise dünner als die Trägerplatte ist.

6. Verfahren zur Herstellung eines Paneels nach einem der vorhergehenden Ansprüche,
**dadurch gekennzeichnet, dass**
eine Trägerplatte als zu verpressende Schicht eingesetzt wird, die aus HDF, MDF oder Spanmaterial oder Holz besteht.

7. Verfahren zur Herstellung eines Paneels nach einem der vorhergehenden Ansprüche,
**dadurch gekennzeichnet, dass**
eine Trägerplatte, eine schallverbessernde Schicht und ein dazwischen liegendes, mit Aminoplast getränktes Papier verpresst wird.

8. Verfahren zur Herstellung eines Paneels nach einem der vorhergehenden Ansprüche,
**dadurch gekennzeichnet, dass**
ein Melaminharz und/ oder ein Harnstoffharz als Aminoplast verwendet wird.

9. Verfahren zur Herstellung eines Paneels nach einem der vorhergehenden Ansprüche,
**dadurch gekennzeichnet, dass**
wenigstens eine aus Holz bestehende Schicht vorgesehen wird, die vorzugsweise eine obere Lage in dem Schichtsystem bildet, welches verpresst wird.

10. Verfahren zur Herstellung eines Paneels nach einem der vorhergehenden Ansprüche,
**dadurch gekennzeichnet, dass**
die schallverbessernde Schicht aus einem Material besteht, welches oberhalb von 1 00°C, vorzugsweise oberhalb von 200°C temperaturbeständig ist.

11. Verfahren zur Herstellung eines Paneels nach einem der vorhergehenden Ansprüche,
**dadurch gekennzeichnet, dass**
nach dem Verpressen die so hergestellte Platte zersägt wird.

12. Paneel, herstellbar nach einem Verfahren gemäß einem der vorhergehenden Ansprüche,
**dadurch gekennzeichnet, dass**
eine schallverbessernden Schicht an der Unterseite des Paneels mittels eines mit Aminoplast getränktem Papiers befestigt ist und das Paneel seitlich Nuten sowie Federn umfasst.

13. Paneel nach dem vorhergehenden Anspruch,
**dadurch gekennzeichnet, dass**
die schallverbessernde Schicht aus elastisch verformbarem Material besteht.

14. Paneel nach einem der vorhergehenden Vorrichtungsansprüche,
**dadurch gekennzeichnet, dass**
die schallverbessernde Schicht aus Polyurethan-Recyclingmaterial, Gummi, Kork, Schaumstoffe, thermoplastische Materialien, Fasermatten, LDF oder Polyäthylen besteht.

15. Paneel nach einem der vorhergehenden Vorrichtungsansprüche,
**dadurch gekennzeichnet, dass**
die schallverbessernde Schicht eine Dichte von 20 bis 2500 kg/m³ aufweist.

16. Paneel nach einem der vorhergehenden Vorrichtungsansprüche,
**dadurch gekennzeichnet, dass**
das Paneel eine Trägerplatte umfasst und die schallverbessernde Schicht dünner als die Trägerplatte ist.

17. Paneel noch einem der vorhergehenden Vorrichtungsansprüche,
**dadurch gekennzeichnet, dass**
das Paneel eine Trägerplatte umfasst, die aus HDF, MDF, Spanmaterial oder Holz besteht, und oberhalb der Trägerplatte ein Dekorpapier oder ein Holzfurnier angebracht ist.

18. Paneel nach einem der vorhergehenden Vorrichtungsansprüche,
**dadurch gekennzeichnet, dass**
ein Melaminharz und/ oder ein Harnstoffharz als Aminoplast eingesetzt ist.

19. Paneel nach einem der vorhergehenden Vorrichtungsansprüche,
**dadurch gekennzeichnet, dass**
wenigstens eine aus Holz bestehende Schicht vorgesehen ist, die vorzugsweise eine obere Lage in dem Schichtsystem bildet, welches das Paneel bildet.

20. Paneel nach einem der vorhergehenden Vorrichtungsansprüche,
**dadurch gekennzeichnet, dass**
die schallverbessernde Schicht aus einem Material besteht, welches oberhalb von 100°C, vorzugsweise oberhalb von 200°C temperaturbeständig ist.

21. Paneel nach einem der vorhergehenden Vorrichtungsansprüche,
**dadurch gekennzeichnet, dass**
die schallverbessernde Schicht seitlich bündig mit dem Paneel abschließt.

22. Paneel nach einem der vorhergehenden Vorrichtungsansprüche,
**dadurch gekennzeichnet, dass**
das Paneel 5 bis 20 mm und die schallverbessernde Schicht bis zu 5 mm dick ist.

23. Paneel nach einem der vorhergehenden Vorrichtungsansprüche,
**dadurch gekennzeichnet, dass**
wenigstens eine Nut von unten in das Paneel eingefräst ist und die schallverbessernde Schicht von beiden Seiten bündig an die Nut angrenzt.

## Claims

1. A method for the production of a panel having a sound insulation layer mounted thereon, in which several layers are pressed in a press by supplying pressure and heat, wherein single layers are made of wood, derived timber product or paper, at least one layer being a paper provided with aminoplast,
**characterized in that**
the layers are pressed together with the sound insulation layer ,
wherein the sound insulation layer is connected to the paper that is impregnated with aminoplast,
and after pressing, the panel is provided with locking elements.

2. A method for the production of a panel according to claim 1,
**characterized in that**
the sound insulation layer is made of elastically deformable material.

3. A method for the production of a panel according to claim 1 or 2,
**characterized in that**
the sound insulation layer consists of polyurethane recycling material, rubber, cork, foamed material, thermoplastic materials, fibre mats, LDF or polyethylene.

4. A method for the production of a panel according to one of the preceding claims,
**characterized in that**
the sound insulation layer has a density comprised between 20 and 2500 kg/m³.

5. A method for the production of a panel according to one of the preceding claims,
**characterized in that**
a carrier plate is used as layer to be pressed and the sound insulation layer is preferably thinner than the carrier plate.

6. A method for the production of a panel according to one of the preceding claims,
**characterized in that**
a carrier plate is used as layer to be pressed, which consists of HDF, MDF or chip material or wood.

7. A method for the production of a panel according to one of the preceding claims,
**characterized in that**
a carrier plate, a sound insulation layer and an interposed paper that is impregnated with aminoplast are pressed.

8. A method for the production of a panel according to one of the preceding claims,
**characterized in that**
a melamin resin and/or a urea resin is used as aminoplast.

9. A method for the production of a panel according to one of the preceding claims,
**characterized in that**
at least one layer consisting of wood is provided, which preferably forms an upper layer in the layer system, which will be pressed.

10. A method for the production of a panel according to one of the preceding claims,
**characterized in that**
the sound insulation layer consists of a material that is temperature stable at above 100°C, preferably at above 200°C.

11. A method for the production of a panel according to one of the preceding claims,
**characterized in that**
after pressing, the thus produced plate will be sawn.

12. A panel that can be produced according to a method according to one of the preceding claims,
**characterized in that**
a sound insulation layer is fixed at the bottom side of the panel by means of an aminoplast impregnated paper and the panel laterally comprises grooves as well as tongues.

13. A panel according to the preceding claim,
**characterized in that**
the sound insulation layer is made of elastically deformable material.

14. A panel according to one of the preceding device claims,
**characterized in that**
the sound insulation layer consists of polyurethane recycling material, rubber, cork, foamed material, thermoplastic materials, fibre mats, LDF or polyethylene.

15. A panel according to one of the preceding device claims,
**characterized in that**
the sound insulation layer has a density comprised between 20 and 2500 kg/m³.

16. A panel according to one of the preceding device claims,
**characterized in that**
the panel comprises a carrier plate and the sound insulation layer is thinner than said carrier plate.

17. A panel according to one of the preceding device claims,
**characterized in that**
the panel comprises a carrier plate that consists of HDF, MDF, chip material or wood, and a paper impregnated with synthetic resin or a wood veneer is mounted above said carrier plate.

18. A panel according to one of the preceding device claims,
**characterized in that**
a melamin resin and/or a urea resin is used as aminoplast.

19. A panel according to one of the preceding device claims,
**characterized in that**
at least one layer consisting of wood is provided, which preferably forms an upper layer in the layer system, which will form the panel.

20. A panel according to one of the preceding device claims,
**characterized in that**
the sound insulation layer consists of a material that is temperature stable at above 100°C, preferably at above 200°C.

21. A panel according to one of the preceding device claims,
**characterized in that**
the sound insulation layer laterally forms a flush end with the panel.

22. A panel according to one of the preceding device claims,
**characterized in that**
the panel has a thickness comprised between 5 and 20 mm and the sound insulation layer has a thickness of up to 5 mm.

23. A panel according to one of the preceding device claims,
**characterized in that**
at least one groove has been milled from below into the panel and the sound insulation layer is adjacent in a flush manner to the groove from both sides.

## Revendications

1. Procédé de fabrication d'un panneau pourvu d'une couche d'isolation acoustique, dans lequel plusieurs couches sont comprimées dans une presse par alimentation en pression et en chaleur, des couches individuelles étant en bois, en matériau dérivé du bois ou en papier et au moins une couche étant un papier muni d'aminoplaste,
**caractérisé en ce que**
les couches sont comprimées ensemble avec la couche d'isolation acoustique,
la couche d'isolation acoustique étant reliée au papier imprégné d'aminoplaste, et après compression, le panneau est muni des éléments de verrouillage.

2. Procédé de fabrication d'un panneau selon la revendication 1,
**caractérisé en ce que**
la couche d'isolation acoustique consiste en une matière élastiquement déformable.

3. Procédé de fabrication d'un panneau selon la revendication 1 ou 2,
**caractérisé en ce que**
la couche d'isolation acoustique est composée d'une matière de recyclage de polyuréthane, de caoutchouc, de liège, d'un produit alvéolaire, des matières thermoplastiques, des nattes de fibres, de LDF ou de polyéthylène.

4. Procédé de fabrication d'un panneau selon l'une des revendications précédentes,
**caractérisé en ce que**
la couche d'isolation acosutique a une densité comprise entre 20 et 2500 kg/m³.

5. Procédé de fabrication d'un panneau selon l'une des revendications précédentes,
**caractérisé en ce qu'**
on utilise une plaque de support comme couche à comprimer et la couche d'isolation acoustique est de préférence plus mince que la plaque de support.

6. Procédé de fabrication d'un panneau selon l'une des revendications précédentes,
**caractérisé en ce qu'**
on utilise une plaque de support comme couche à comprimer, qui est composée de HDF, de MDF ou de copeaux ou de bois.

7. Procédé de fabrication d'un panneau selon l'une des revendications précédentes,
**caractérisé en ce qu'**
une plauqe de support, une couche d'siolation acoustique et un papier interposé et imprégné d'aminoplaste sont comprimés.

8. Procédé de fabrication d'un panneau selon l'une des revendications précédentes,
**caractérisé en ce qu'**
on utilise une résine de mélamine et/ou une résine d'urée comme aminoplaste.

9. Procédé de fabrication d'un panneau selon l'une des revendications précédentes,
**caractérisé en ce qu'**
on prévoit au moins une couche de bois, qui forme de préférence une couche supérieure dans le système de couches qui est comprimé.

10. Procédé de fabrication d'un panneau selon l'une des revendications précédentes,
**caractérisé en ce que**
la couche d'isolation acoustique consiste en une matière qui est résistante à chaud à plus de 100°C, de préférence à plus de 200°C.

11. Procédé de fabrication d'un panneau selon l'une des revendications précédentes,
**caractérisé en ce qu'**
après la compression, la plaque ainsi fabriquée est sciée.

12. Panneau, qui peut être fabriqué selon un procédé selon l'une des revendications précédentes,
**caractérisé en ce qu'**
une couche d'isolation acoustique est fixée à la face inférieure du panneau par moyen d'un papier imprégné d'aminoplaste et le panneau comprend latéralement des languettes ainsi que des rainures.

13. Panneau selon la revendication précédente,
**caractérisé en ce que** la couche d'isolation acoustique consiste en une matière élastiquement déformable.

14. Panneau selon l'une des revendications de dispositif précédentes,
**caractérisé en ce que**
la couche d'isolation acoustique est composée d'une matière de recyclage de polyuréthane, de caoutchouc, de liège, d'un produit alvéolaire, des matières thermoplastiques, des nattes de fibres, de LDF ou de polyéthylène.

15. Panneau selon l'une des revendications de dispositif précédentes,
**caractérisé en ce que**
la couche d'isolation acosutique a une densité comprise entre 20 et 2500 kg/m³.

16. Panneau selon l'une des revendications de dispositif précédentes,
**caractérisé en ce que**
le panneau comprend une plaque de support et la couche d'isolation acoustique est plus mince que la plaque de support.

17. Panneau selon l'une des revendications de dispositif précédentes,
**caractérisé en ce que**
le panneau comprend une plaque de support qui est composée de HDF, de MDF ou de copeaux ou de bois, et un papier pour l'imprégnation avec résines synthétiques ou un contreplacage de bois est monté au-dessus de la plaque de support.

18. Panneau selon l'une des revendications de dispositif précédentes,
**caractérisé en ce qu'**
on utilise une résine de mélamine et/ou une résine d'urée comme aminoplaste.

19. Panneau selon l'une des revendications de dispositif précédentes,
**caractérisé en ce qu'**
au moins une couche de bois est prévue, qui forme de préférence une couche supérieure dans le système de couches qui forme le panneau.

20. Panneau selon l'une des revendications de dispositif précédentes,
**caractérisé en ce que**
la couche d'isolation acoustique consiste en une matière qui est résistante à chaud à plus de 100°C, de préférence à plus de 200°C.

21. Panneau selon l'une des revendications de dispositif précédentes,
**caractérisé en ce que**
la couche d'isolation acoustique est latéralement à fleur avec le paneau.

22. Panneau selon l'une des revendications de dispositif précédentes,
**caractérisé en ce que**
le panneau a une épaisseur comprise entre 5 et 20 mm et la couche d'isolation acoustique a une épaisseur de jusqu'à 5 mm.

23. Panneau selon l'une des revendications de dispositif précédentes,
**caractérisé en ce qu'**
au moins une rainure est fraisée du dessous dans le panneau et la couche d'isolation acoustique aboutit à fleur à la rainure de deux côtés.
